# EUROPEAN PATENT SPECIFICATION

(11) **EP 1 923 374 B1**
(45) Date of publication and mention of the grant of the patent: **30.09.2009**
(21) Application number: 06291781.0
(22) Date of filing: 16.11.2006
(51) Int. Cl.: C04B 41/67

(54) **Process for treating concrete**
Verfahren zur Behandlung von Beton
Procédé de traitement du béton

(43) Date of publication of application: 21.05.2008
(73) Proprietor: LAFARGE, 75116 Paris (FR)
(72) Inventor: Batoz, Jean-François, 75014 Paris (FR); Vernet, Christian, 78200 Jouy-Mauvoisin (FR); Vanhove, Michel, 38460 Cremieu (FR); Begaud, Fabienne, 38510 Morestel (FR)
(74) Representative: Mérigeault, Shona

(56) References cited:
- DE-A1- 19 707 219
- CHEMICAL ABSTRACTS, vol. 84, no. 16, 19 April 1976 (1976-04-19), Columbus, Ohio, US; abstract no.: 110576j, XP000185805 & JP 75 112419 A (OSAKA SODA CO) 3 September 1975 (1975-09-03)
- DATABASE WPI Week 199834 Derwent Publications Ltd., London, GB; AN 1998-396822 XP002432575 & RU 2 101 254 C1 (SPEKTR AVTOMATIKA STOCK CO) 10 January 1998 (1998-01-10)

## Description

This application relates to a process for treating a concrete surface to render it more resistant to undesired staining or marking, and to the concrete surface thus obtained.

Hexametaphosphate (HMP) is a known material which has various uses, for example in water treatment as a softening or anti-corrosion agent, to inhibit scaling in water systems and as a dispersing agent for finely divided solids dispersed in water (for example in clay processing, oil-well drilling muds and in the manufacture of pigments).

It is known that a concrete surface is susceptible to undesired staining. This may be due to stains deliberately applied, for example in the form of graffiti, or stains arising as a result of accidental spillage of materials such as wine or coffee. Coating or protection products are commercially available and are intended to protect against staining, in particular by oil or water-based materials (for example as graffiti) or by dust due to pollution.

There are, in particular, numerous products to combat graffiti. Urethane products have been used. They form a watertight, hard surface coating. Acrylic resin films formed using methyl methacrylate are also known. In DE 19707219 silanes and siloxanes have also been used to render surfaces impermeable. The prior art also teaches that it is advantageous to use compositions comprising at least two active substances as such compositions cope better with rises in temperature and/or yield more resistant protective films.

However, known coating and protective coatings suffer from a number of disadvantages:
they may alter the appearance of the treated surface, making it more or less shiny;
they may form a surface film which creates a barrier resisting the penetration of water but also blocking gas exchange and therefore hindering the release of water vapour through the treated surface;
the surface film created may be susceptible to degradation by ultraviolet irradiation or by mechanical or chemical attack.

The present invention seeks to overcome one or more of the disadvantages associated with the use of known anti-staining products. In particular it seeks to provide a method of rendering a concrete surface resistant to various types of staining; rendering a stained or marked surface easier to clean; and/or to provide a more durable resistance to undesired staining or marking.

The invention provides a method of treating a concrete surface to render it less susceptible to undesired staining or marking which process comprises contacting the surface with an aqueous solution comprising a water soluble polyphosphate.

The term water soluble as used in this specification including the accompanying claims refers to a water solubility of at least 10g/l at ambient temperature.

The term polyphosphate as used in this specification, including the accompanying claims, is to be understood to embrace linear and cyclic polyphosphates. Linear polyphosphates comprise chains of metaphosphate units (MPO₃)ₓ, in which M is a cation, terminated by M₂PO₄ units: when x is zero the two M₂PO₄ units are joined by an oxygen atom in common and the compound is a pyrophosphate; when x is 1 the compound is a tripolyphosphate; and when x is 2 the compound is a tetrapolyphosphate. As the value of x increases the formula approximates more and more closely to the formula (MPO₃)ₙ (in which n=x+2); this formula represents cyclic polyphosphates.

The cation M represents sodium, although other cations such as other alkali metals, for example potassium, and alkaline earth metals, for example magnesium, may be used. M may also represent an ammonium ion. A mixture of cations may be present.

Sodium polyphosphates are obtained when monosodium phosphate (NaH₂PO₄) is heated to produce a melt. A condensation reaction takes place in which dehydration occurs to produce a mixture of polyphosphates. The chain length and crystallinity of the polyphosphates produced depends on a number of process parameters including the temperature and duration of heating, the water vapour pressure above the melt and the rate of cooling at the end of the process.

Water soluble polyphosphates obtained in a similar manner are known and sold commercially under various names including metaphosphate, Graham's salt, phosphate glass (glassy phosphate) and hexametaphosphate (HMP). The term metaphosphate is often used as a synonym for hexametaphosphate. Sodium hexametaphosphate is a cyclic compound having the formula (NaPO₃)₆.

Commercially available sodium metaphosphate products generally comprise a mixture of polyphosphates and are sold with an indication of their composition in terms of the approximate or average value of n (the degree of polymerisation) in the general formula (NaPO₃)ₙ.

Water solubility decreases as n increases, with a corresponding increase in polymer chain length. The upper limit of n is set by the requirement that the polyphosphate used in the invention is water soluble. The value of n may be, for example, 6 to 100.

Commercial sodium polyphosphates are also identified by their Na₂O/P₂O₅ ratio or their P₂O₅ content. Tetrasodium pyrophosphate has a ratio of about 2:1. The Na₂O/P₂O₅ molar ratios of other polyphosphates vary from about 1.3:1 for sodium tetrapolyphosphate, in which x is approximately 2; to about 1.1:1 for Graham's salt (also called sodium hexametaphosphate) in which x is, for example, 13 to 18; and to about 1:1 for higher molecular weight sodium polyphosphates in which x is, for example, 20 to 100 or more. Water soluble alkali metal (e.g. sodium) polyphosphates for use in the invention generally have a molar ratio of alkali metal to phosphorus pentoxide from 0.9:1 to 2:1. The P₂O₅ content is generally from 60 to 71 % by weight.

A polyphosphate having a Na₂O/P₂O₅ ratio of about 1.1:1, a molecular weight of 1500-2000 and a degree of polymerisation of about 15-20 is marketed under the name Calgon. Similar commercially available materials have slightly higher Na₂O/P₂O₅ ratios and degrees of polymerisation of 6-8 and 12-14.

Sodium metaphosphate in which n is about 25 gives good results in the process of the invention.

The concrete to which the process of the invention is applied generally has a water/cement (w/c) weight ratio of at most about 0.3, preferably 0.20 to 0.27. The concrete may be a silica fume-containing concrete.

The concrete to which the process is applied generally has a water porosity less 14% preferably less than 12%, for example less than 10% (as determined by the method described in Compte-Rendue Joumees Techniques, AFPC-AFREM, December 1997, pages 121 to 124).

The concrete generally has a compressive strength from 50 Mpa to 300 MPa, for example 80 to 250 Mpa. The concrete is preferably an ultra high performance concrete (UHPC), for example containing fibres. The process is preferably applied to such concrete as described in EP-B-1034148 and EP-B-1080049.

UHPC is a concrete comprising a cementitious fibre-containing matrix. They are described in a document entitled "Ultra High Performance Fibre-containing Concretes" of the French Department of Technical Studies of Roads and Motorways (SETRA) and the French Association of Civil Engineering (AFGC). The compression resistance of such concretes is generally greater than 150 Mpa, for example 250 Mpa. The fibres are metallic, organic or a mixture thereof.

The cementitious matrix generally comprises a cement (Portland), a pozzolanic material (for example silica fume) and a fine sand. The relative dimensions and quantities of the components are chosen having regard to the particular materials used. The cementitious matrix may comprise, for example:
Portland cement;
Fine sand;
A pozzolanic material of the silica fume type; and, optionally, quartz flour.

The particle sizes vary from sub-micron to micron to millimetre ranges, with a maximum generally not exceeding 5 mm. A superplasticizer is generally added with the mixing water.

Examples of cementitious matrices are those described in published patent applications nos. EP-A-518777, EP-A-934915, WO-A-9501316, WO-A-9501317, WO-A-9928267, WO-A-9958468, WO-A-9923046, and WO-A-0158826.

The fibre content is generally low, for example 1 to 8% by volume.

Examples of the cementitious matrix are reactive powder concretes (RPC); examples of the UHPC are the BSI concretes of Eiffage, Ductal^{®} of Lafarge, Cimax^{®} of Italcementi and BCV of Vicat.

The treatment is generally effected by brushing, spraying or dipping, for example by spraying (especially if the concrete structure to be treated is large).

The aqueous solution for use in the process of the invention generally comprises 1 to 50, preferably 5 to 20, for example 10 to 15 g/l of polyphosphate.

When the solution is applied to a concrete surface by spraying the quantity of liquid applied is preferably sufficient to saturate the surface (for example by spraying until liquid starts to run off the surface). Additional treatments may be applied, for example after allowing a previously treated surface to dry.

The treatment with HMP is generally effected within a few days, for example three days, of the demoulding of a concrete surface. The treatment is preferably effected within a few hours, for example two hours, of demoulding, more preferably shortly after demoulding.

Aqueous solutions of HMP used in the method of the invention may contain water-miscible solvents provided that they are compatible with the HMP and with the concrete surface to which they are to be applied.

The concrete to be treated is generally white or grey.

The resistance to staining or marking of a concrete surface treated by the process of the invention is generally such that the stained or marked surface can be cleaned with water or water containing a cleaning agent to reduce the level of staining or marking, preferably to reduce substantially or, more preferably, to remove a stain or mark.

Evaluation of the resistance to staining or marking of a concrete surface can be effected by staining or marking the surface, allowing the stain or mark to dry for two hours at ambient temperature and then wiping the surface with water containing ordinary washing up liquid using a cloth or sponge. Examples of the stains or marks against which the process of the invention are effective are given in the illustrative Example which follows. They include one or more of the stains or marks caused by aqueous liquids, for example tea, coffee, carbonated drinks and wine; vegetable oils such as sunflower oil; paints and inks, for example acrylic paints; markers and felt tip pens; methylene blue and methyl violet.

When a concrete surface treated in accordance with the invention has suffered undesired staining or marking, cleaning to remove or reduce the intensity of staining or marking is generally effected with water. The water may contain a cleaning agent, for example a detergent which may contain one or more surfactants. Cleaning may also be effected using an aqueous solution comprising a polyphosphate.

The invention also provides an object or construction, for example a building or work of art such as a statue, comprising a concrete surface treated by a process according to the invention.

In this specification, including the accompanying claims, percentages are by weight unless otherwise specified.

The following Example illustrates but does not limit the invention.

### EXAMPLE

### Preparation of samples

A concrete composition of the Ductal® type commercialised by Lafarge was mixed. The constituents and proportions were as follows (proportions are by weight):

| | |
|---|---|
| SB 52.5 (Le Teil) | : 1 |
| Silica fume (MST) | : 0.3 |
| Silica filler (C400: Sifraco) | : 0.24 |
| Silica sand (BE01: Sifraco) | : 1.43 |
| Fibres (APV 12mm) | : 0.079 |
| Superplasticiser (Chryso F2) | : 0.046 |
| Accelerator (Chryso: CaCl₂-based) A2 | : 0.0175 |
| Water/cement ratio | : 0.26 |

The mixture was poured into a bakelised wood mould. The open surface of the concrete composition was covered with a water-saturated geotextile during the maintenance phase (about 18 hours).
One hour after demoulding of the samples a part of each sample was dipped into a 10% w/w solution of polyphosphate (sodium metaphosphate: CAS number 10361-03-2; crude general formula (NaPO₃)ₙ, n=ca.25). Each sample was dipped for 5 seconds into the solution, left for 30 minutes at ambient temperature and then dipped again for 5 seconds. The treated samples were not wiped after dipping.
Seven days after demoulding and treatment with polyphosphate the samples were subjected to a staining test (for each stain or mark both untreated and HMP-treated surfaces were used). The staining products used were as follows:
methylene blue;
sunflower oil;
coffee;
cocoa;
red wine;
acrylic paint available from Colorex Technic, France
aerosol paint available from Marabu, France;
lemon juice;
milk; and
water.

The stained samples were left for four hours at ambient temperature. A photograph of the marked surface was taken. The surface was then cleaned using a wet sponge and ordinary washing up liquid and a new photograph taken of the cleaned surface. The results of a visual comparison of the two photographs are shown in the following Table.

### Resistance to staining: appearance of each marked surface after washing

| | Milk | Lemon Juice | Water | Coffee | Sunflower oil |
|---|---|---|---|---|---|
| Without HMP treatment | Slight | Intact | Intact | Very slightly reduced | Very slightly reduced |
| With HMP treatment | Disappeared | Reduced | Disappeared | Disappeared | Reduced |

| | Red wine stain | Cocoa | Aerosol paint | Acrylic paint | Methylene blue |
|---|---|---|---|---|---|
| Without HMP treatment | Very slightly reduced | Intact | Intact | Intact | Intact |
| With HMP treatment | Disappeared | Disappeared | Slightly reduced | Disappeared | Reduced |

It is apparent from the results that treatment with HMP is effective in protecting the concrete surface against numerous stains and marks, in particular against permanent acrylic paints.

## Claims

1. A method of treating a concrete surface to render it less susceptible to undesired staining or marking which process comprises contacting the surface with an aqueous solution comprising a water soluble polyphosphate of a cation, said cation being in the group comprising alkali metals, alkaline earth metals, ammonium ion or a mixture thereof.

2. A method according to claim 1 in which the polyphosphate is a sodium polyphosphate.

3. A method according to claim 1 or 2, wherein the polyphosphate is a cyclic polyphosphate having the formula (MPO₃)ₙ, where M is the cation and n is the degree of polymerisation, the value of n being 6 to 100.

4. A method according to any one of the preceding claims in which the polyphosphate has a P₂O₅ content of 60 to 71% by weight.

5. A method according to any one of the preceding claims in which the concrete has a porosity of less than 12%.

6. A method according to any one of the preceding claims in which the concrete has a water/cement ratio of 0.20 to 0.27.

7. A method according to any one of the preceding claims in which the concrete is an ultra high performance fibre-containing concrete.

8. A method according to any one of the preceding claims in which the concrete surface is on a concrete structure and the surface is treated within two hours of demoulding.

9. A concrete structure comprising a surface treated by a process according to any one of the preceding claims.

## Patentansprüche

1. Ein Verfahren zur Behandlung einer Betonoberfläche, um sie unempfindlicher gegen unerwünschtes Färben oder Beschriften zu machen, wobei das Verfahren das Inkontaktbringen der Oberfläche mit einer wässrigen Lösung umfasst, welche ein wasserlösliches Polyphosphat eines Kations enthält, wobei das Kation aus der Gruppe ist, die Alkalimetalle, Erdalkalimetalle, Ammoniumion oder eine Mischung davon enthält.

2. Ein Verfahren gemäß Anspruch 1, bei dem das Polyphosphat ein Natriumpolyphosphat ist.

3. Ein Verfahren gemäß Anspruch 1 oder 2, bei dem das Polyphosphat ein cyclisches Polyphosphat mit der Formel (MPO3)ₙ ist, wobei M das Kation ist und n der Polymerisationsgrad ist, wobei der Wert von n 6 bis 100 beträgt.

4. Ein Verfahren gemäß einem der vorhergehenden Ansprüche, bei dem das Polyphosphat einen P₂O₅-Gehalt von 60 bis 71 Gew.-% besitzt.

5. Ein Verfahren gemäß einem der vorhergehenden Ansprüche, bei dem der Beton eine Porosität von weniger als 12% besitzt.

6. Ein Verfahren gemäß einem der vorhergehenden Ansprüche, bei dem der Beton ein Wasser/Zement-Verhältnis von 0,20 bis 0,27 besitzt.

7. Ein Verfahren gemäß einem der vorhergehenden Ansprüche, bei dem der Beton ein ultrahochfester faserhaltiger Beton ist.

8. Ein Verfahren gemäß einem der vorhergehenden Ansprüche, bei dem die Betonoberfläche sich auf einer Betonstruktur befindet und die Oberfläche innerhalb von zwei Stunden nach der Entformung behandelt wird.

9. Eine Betonstruktur, die eine Oberfläche umfasst, welche durch ein Verfahren gemäß einem der vorhergehenden Ansprüche behandelt wurde.

## Revendications

1. Procédé de traitement d'une surface en béton pour la rendre moins sensible aux taches ou aux marques, ledit procédé comprenant la mise en contact de la surface avec une solution aqueuse comprenant un polyphosphate, soluble dans l'eau, d'un cation, ledit cation étant dans le groupe comprenant les métaux alcalins, les métaux alcalinoterreux, l'ion ammonium ou un mélange de ceux-ci.

2. Procédé selon la revendication 1, dans lequel le polyphosphate est un polyphosphate de sodium.

3. Procédé selon la revendication 1 ou 2, dans lequel le polyphosphate est un polyphosphate cyclique ayant la formule (MOP₃)ₙ, où M est le cation et n est le degré de polymérisation, la valeur de n étant de 6 à 100.

4. Procédé selon l'une quelconque des revendications précédentes, dans lequel le polyphosphate a un taux de P₂O₅ de 60 à 71 % en poids.

5. Procédé selon l'une quelconque des revendications précédentes, dans lequel le béton a une porosité inférieure à 12 %.

6. Procédé selon l'une quelconque des revendications précédentes, dans lequel le béton a un rapport eau/ciment de 0,20 à 0,27.

7. Procédé selon l'une quelconque des revendications précédentes, dans lequel le béton est un béton fibré à ultra hautes performances.

8. Procédé selon l'une quelconque des revendications précédentes, dans lequel la surface en béton est sur une structure en béton et la surface est traitée dans les deux heures qui suivent le démoulage.

9. Structure en béton comprenant une surface traitée par un procédé selon l'une quelconque des revendications précédentes.
